# EUROPÄISCHE PATENTANMELDUNG

(11) **EP 4 169 813 A1**
(43) Veröffentlichungstag der Anmeldung: **26.04.2023**
(21) Anmeldenummer: 22201611.5
(22) Anmeldetag: 14.10.2022
(51) Int. Cl.: B62D 25/16, B60K 1/04, B60K 1/00, B62D 21/02, B62D 25/02

(54) **TRÄGER FÜR EIN AUSSENVERKLEIDUNGSTEIL**

(30) Priorität: 25.10.2021 DE 102021127607
(71) Anmelder: MAN Truck & Bus SE, 80995 München (DE)
(72) Erfinder: Schmitz, Andreas, 80995 München (DE)
(74) Vertreter: v. Bezold & Partner Patentanwälte - PartG mbB

(57) **Zusammenfassung**

Die Erfindung betrifft eine Vorrichtung für ein, vorzugsweise elektrisch angetriebenes, Kraftfahrzeug (10), aufweisend einen Fahrzeugrahmen (16), mindestens ein Außenverkleidungsteil (26, 28, 30) und einen Träger (34), der an dem Fahrzeugrahmen (16) befestigt ist und das mindestens eine Außenverkleidungsteil (26, 28, 30) trägt. Der Träger (34) weist eine Materialaussparung (36) auf. Mindestens ein, vorzugsweise elektrisches, Gerät (38) ist in der Materialaussparung (36) angeordnet und von dem Träger (34) getragen. Vorteilhaft kann somit eine bauraumgünstige und geschützte Anordnung des mindestens einen Geräts (38) ermöglicht werden.

## Beschreibung

Die Erfindung betrifft eine Vorrichtung für ein Kraftfahrzeug, aufweisend einen Fahrzeugrahmen, mindestens ein Außenverkleidungsteil und einen Träger.

Der Übergang von verbrennungsmotorisch angetriebenen Lastkraftwagen zu elektromotorisch angetriebenen Lastkraftwagen stellt die Hersteller vor vielfältige Herausforderungen. Ein Problemkreis besteht beispielsweise darin, dass in elektrisch angetriebenen Lastkraftwagen häufig Bauraumknappheit herrscht, da viele elektrische Komponenten, insbesondere des Hochvolt-Systems, vergleichsweise viel Bauraum benötigen (z. B. Traktionsbatterie(n), Elektromotoren)). Ein weiterer Problemkreis besteht in den hohen Entwicklungskosten für neue Lastkraftwagenteile. Dieser Problemkreis kann beispielsweise dadurch abgemildert werden, dass bestehende Lastkraftwagenteile zum Anpassen an Anforderungen der elektrisch angetriebenen Lastkraftwagen modifiziert werden.

Ein Ansatz zum Begegnen der Bauraumprobleme besteht in einer vollständigen Neuentwicklung des Lastkraftwagens, sodass Komponenten frei angeordnet werden können, wie dies beispielsweise aus den beiden nachfolgend genannten Druckschriften bekannt ist.

Aus der EP 3 616 956 A1 ist es beispielsweise bekannt, ein separates Energiemodul für ein Nutzfahrzeug vorzusehen. Das separate Energiemodul weist beispielsweise mehrere Hochvolt-Energiespeicher, ein Bordladegerät, einen Hochvolt-Stromverteiler, einen Heizer, einen DC-DC-Wandler, einen Niedervolt-Energiespeicher, eine Hochvolt-Schnittstelle und einen Reichweitenverlängerer auf. Das Energiemodul ist von unten an einem Fahrzeugrahmen des Nutzfahrzeugs zwischen einer Vorderachse und einer Hinterachse des Nutzfahrzeugs angebracht. Das Energiemodul erstreckt sich über eine gesamte Fahrzeugbreite.

Aus der EP 3 626 497 A2 ist beispielsweise ein Nutzfahrzeug bekannt, dass ein separates Energiebereitstellungsmodul aufweist. Das separate Energiebereitstellungsmodul weist mehrere Hochvolt-Energiespeicher, ein Kühlsystem für die Hochvolt-Energiespeicher, einen Heizer für die Hochvolt-Energiespeicher, einen Hochvolt-Stromverteiler, ein Bordladegerät, einen DC-DC-Wandler, mehrere Niedervolt-Energiespeicher und eine Lenkpumpe auf. Das Energiebereitstellungsmodul ist von unten starr an dem Fahrzeugrahmen montiert.

Der Erfindung liegt die Aufgabe zu Grunde, eine verbesserte Vorrichtung zu schaffen, mit der vorzugsweise zusätzlicher Bauraum für Geräte geschaffen wird, ohne dass hierfür beispielsweise die Außenabmessungen des Kraftfahrzeugs vergrößert werden müssen.

Die Aufgabe wird gelöst durch die Merkmale des unabhängigen Anspruchs. Vorteilhafte Weiterbildungen sind in den abhängigen Ansprüchen und der Beschreibung angegeben.

Ein Aspekt betrifft eine (z. B. Trag-) Vorrichtung für ein vorzugsweise elektrisch angetriebenes Kraftfahrzeug, vorzugsweise ein Nutzfahrzeug (z. B. Lastkraftwagen oder Omnibus). Die Vorrichtung weist einen Fahrzeugrahmen (z. B. ausgeführt als ein Leiterrahmen), mindestens ein Außenverkleidungsteil und einen (z. B. einteiligen und/oder Guss-) Träger, der (z. B. fahrerseitig oder beifahrerseitig außen) an dem Fahrzeugrahmen (z. B. direkt oder indirekt) befestigt ist und das mindestens eine Außenverkleidungsteil (z. B. direkt oder indirekt) trägt, auf. Der Träger weist eine (z. B. innere) Materialaussparung auf. Die Vorrichtung weist mindestens ein, vorzugsweise elektrisches, Gerät auf, das in der Materialaussparung angeordnet (z. B. integriert und/oder eingebaut) und von dem Träger getragen ist.

Vorteilhaft ermöglicht die Vorrichtung, dass innerhalb des Trägers mittels der Materialaussparung Bauraum geschaffen wird. Der Bauraum kann durch Anordnung des mindestens einen Geräts ausgenutzt werden. Damit kann das mindestens eine Gerät besonders bauraumgünstig angeordnet werden. In Fahrzeuglängsrichtung kann der Bauraum somit insgesamt verbessert ausgenutzt werden. Zusätzlich kann das mindestens eine Gerät durch die Anordnung im Träger durch den Träger selbst besonders geschützt sein. Ferner kann die Vorrichtung ermöglichen, dass das mindestens eine Gerät nahe dem Äußeren des Kraftfahrzeugs angeordnet werden kann, wodurch insbesondere Schnittstellengeräte oder schnittstellennahe Geräte bevorzugt in dem Träger angeordnet werden können.

In einem Ausführungsbeispiel weist das mindestens eine Außenverkleidungsteil eine Kotflügelradschale, eine Kotflügelblende und/oder eine Seitenvollverkleidung auf. Vorteilhaft kann der Träger bzw. das mindestens eine Gerät somit bauraumgünstig im Bereich einer Vorderachse oder einer Hinterachse des Kraftfahrzeugs angeordnet sein.

Vorzugsweise kann das mindestens eine Gerät und/oder die Materialaussparung auf Höhe des Fahrzeugrahmens und/oder des mindestens einen Außenverkleidungsteils angeordnet sein.

In einem weiteren Ausführungsbeispiel weist das mindestens eine Gerät eine Hochvolt-Komponente (z. B. ab 30 V Wechselspannung oder ab 60 V Gleichspannung), eine Steuereinheit; vorzugweise eine Ladesteuereinheit zum Steuern eines Ladevorgangs einer Traktionsbatterie, und/oder eine elektrische Sicherheitseinrichtung, vorzugsweise aufweisend mindestens einen Ladeschütz, mindestens eine Sicherung, einen Spannungsmesser und/oder einen Strommesser, auf. Vorzugsweise kann somit mindestens ein elektrisches Gerät, das für ein elektrisch angetriebenes Kraftfahrzeug benötigt wird, bauraumgünstig und vorteilhaft geschützt in dem Träger angeordnet sein.

Vorzugsweise kann sich der Begriff "Steuereinheit" auf eine Elektronik (z. B. mit Mikroprozessor(en) und Datenspeicher) beziehen, die je nach Ausbildung Steuerungsaufgaben und/oder Regelungsaufgaben und/oder Verarbeitungsaufgaben übernehmen kann. Auch wenn hierin der Begriff "Steuern" verwendet wird, kann damit gleichsam zweckmäßig auch "Regeln" bzw. "Steuern mit Rückkopplung" und/oder "Verarbeiten" umfasst bzw. gemeint sein.

In einem weiteren Ausführungsbeispiel weist das mindestens eine Gerät ein Gehäuse, vorzugsweise ein Gussgehäuse, auf, das vorzugsweise derart in der Materialaussparung angeordnet (zum Beispiel eingebaut und/oder integriert) ist, dass der Träger durch das Gehäuse versteift und/oder verstärkt ist. Vorteilhaft kann der Träger somit leichter ausgeführt sein. Der Träger und das mindestens eine Gerät können zudem eine positive Wechselwirkung zueinander haben: Beispielsweise stellt der Träger Bauraum für das mindestens eine Gerät zur Verfügung und schützt dieses vorzugsweise, während das Gehäuse des Geräts den Träger verstärken und versteifen kann.

Es ist möglich, dass das Gehäuse einen Abschnitt eines (z. B. Außen-) Umfangs des Trägers bildet.

In einer Ausführungsform ist das mindestens eine Gerät in der Materialaussparung von dem Träger umgriffen. Damit kann bspw. eine besonders geschützte Anordnung des mindestens einen Geräts in der Materialaussparung ermöglicht werden.

In einer weiteren Ausführungsform weist das mindestens eine Gerät im Wesentlichen eine Plattenform auf, wobei vorzugsweise die Plattenform im Wesentlichen in einer Ebene liegt, die parallel zu einer Querachse des Fahrzeugrahmens und/oder parallel zu einer Hochachse des Fahrzeugrahmens ist. Vorteilhaft kann somit eine besonders bauraumgünstige Anordnung erzielt werden.

In einer weiteren Ausführungsform ist die Materialaussparung als eine Durchgangsöffnung, ein Blindloch oder eine Vertiefung ausgeführt. Alternativ oder zusätzlich ist die Materialaussparung, vorzugsweise ausschließlich, in einem plattenförmigen Abschnitt des Trägers angeordnet. Alternativ oder zusätzlich ist die Materialaussparung bezüglich einer Querachse des Fahrzeugrahmens im Wesentlichen mittig in dem Träger oder im Wesentlichen in einer zu dem mindestens einen Außenverkleidungsteil gerichteten Hälfte des Trägers angeordnet. Vorteilhaft kann somit ebenfalls eine besonders bauraumgünstige und geschützte Anordnung des Geräts erzielt werden.

In einer Ausführungsvariante weist der Träger einen ersten Befestigungsabschnitt, der an dem Fahrzeugrahmen befestigt ist, und einen zweiten Befestigungsabschnitt, der an dem mindestens einen Außenverkleidungsteil befestigt ist, auf. Optional kann die Materialaussparung zwischen und/oder beabstandet zu dem ersten Befestigungsabschnitt und/oder dem zweiten Befestigungsabschnitt angeordnet sein.

In einer weiteren Ausführungsvariante weist die Materialaussparung eine Höhe auf, die mindestens 1/3, vorzugsweise 1/2, einer Höhe des Trägers entspricht, vorzugsweise gemessen entlang einer Hochachse des Fahrzeugrahmens. Alternativ oder zusätzlich weist die Materialaussparung eine Breite auf, die mindestens 1/3, vorzugsweise mindestens 1/2, einer Breite des Trägers entspricht, gemessen entlang einer Querachse des Fahrzeugrahmens. Vorteilhaft kann somit ein vergleichsweise großer Ausnahmeraum bzw. Bauraum für das mindestens eine Gerät zur Verfügung gestellt werden, ohne dass dabei vorzugsweise eine Integrität des Trägers übermäßig verringert wird.

In einem Ausführungsbeispiel ist die Materialaussparung durch eine zumindest teilweise, vorzugsweise vollständig, umlaufende Kante des Trägers begrenzt. Optional kann die Kante mindestens einen Befestigungsvorsprung (z. B. Befestigungsnase), aufweisen an der das mindestens eine Gerät (z. B. ein Gehäuse des mindestens einen Geräts) befestigt ist, vorzugsweise mittels einer Schraubverbindung. Vorteilhaft kann somit eine sichere und bauraumgünstige Befestigungsmöglichkeit für das mindestens eine Gerät geschaffen werden.

Es ist auch möglich, dass ein Außenverkleidungsteil, nämlich vorzugsweise die Kotflügelradschale, alternativ oder zusätzlich an dem mindestens einen Befestigungsvorsprung befestigt ist.

In einem weiteren Ausführungsbeispiel ist der mindestens eine Befestigungsvorsprung zu einem Inneren der Materialaussparung hin gerichtet. Vorteilhaft kann somit eine Anordnung und Befestigung des mindestens einen in der Materialaussparung angeordneten Geräts erleichtert werden.

In einem weiteren Ausführungsbeispiel ist der Träger außen an dem Fahrzeugrahmen befestigt, vorzugsweise an einer Außenseite eines Hauptlängsträgers des Fahrzeugrahmens, ist der Träger im Wesentlichen plattenförmig, ist der Träger im Wesentlichen in einer Ebene ausgerichtet, die parallel zu einer Hochachse des Fahrzeugrahmens und/oder zu einer Querachse des Fahrzeugrahmens ist, und/oder ist der Träger, vorzugsweise nur, zwischen dem Fahrzeugrahmen und dem mindestens einen Außenverkleidungsteil angeordnet. Vorteilhaft kann eine derartige Konfiguration des Trägers eine besonders bauraumgünstige und/oder geschützte Anordnung des mindestens einen Geräts ermöglichen.

In einer Ausführungsform weist die Vorrichtung ferner eine Ladesteckdose, die von dem Träger getragen ist (und beispielsweise an einem Außenverkleidungsteil angeordnet ist und/oder elektrisch mit dem mindestens einen Gerät verbunden ist), einen Spritzschutz, der von dem Träger getragen ist, und/oder einen Umgebungserfassungssensor (z. B. Radarsensor), der von dem Träger getragen ist (und beispielsweise an einem Außenverkleidungsteil angeordnet ist und/oder elektrisch mit dem mindestens einen Gerät verbunden ist), auf. Vorteilhaft kann der Träger somit weitere Funktionen in sich vereinigen.

In einer weiteren Ausführungsform weist die Vorrichtung ferner mindestens ein weiteres Außenverkleidungsteil, einen weiteren Träger, der (z. B. außen) an dem Fahrzeugrahmen (z. B. direkt oder indirekt) befestigt ist und der das mindestens eine weitere Außenverkleidungsteil (z. B. direkt oder indirekt) trägt, auf. Der weitere Träger weist eine weitere Materialaussparung auf. Die Vorrichtung weist ferner mindestens ein weiteres, vorzugsweise elektrisches, Gerät auf, das in der weiteren Materialaussparung angeordnet (z. B. eingebaut und/oder integriert) ist. Vorzugweise können die bereits eingangs bezüglich des mindestens einen Geräts und des Trägers erläuterten Vorteile ebenfalls von dem weiteren Träger und dem mindestens einen weiteren Gerät genutzt werden.

In einer Ausführungsvariante ist der weitere Träger auf einer dem Träger entgegengesetzten (z. B. Außen-) Seite des Fahrzeugrahmens oder auf der gleichen (z. B. Außen-) Seite des Fahrzeugrahmens wie der Träger angeordnet.

In einer weiteren Ausführungsvariante ist das mindestens eine weitere Außenverkleidungsteil entsprechend dem mindestens einen Außenverkleidungsteil, der weitere Träger entsprechend dem Träger, die weitere Materialaussparung entsprechend der Materialaussparung und/oder das mindestens eine weitere Gerät entsprechend dem mindestens einen Gerät ausgeführt.

Beispielsweise kann:
- das mindestens eine weitere Außenverkleidungsteil eine Kotflügelradschale, eine Kotflügelblende und/oder eine Seitenvollverkleidung aufweisen;
- das mindestens eine weitere Gerät eine Hochvolt-Komponente, eine Steuereinheit, vorzugweise eine Ladesteuereinheit zum Steuern eines Ladevorgangs einer Traktionsbatterie, und/oder eine elektrische Sicherheitseinrichtung, vorzugsweise aufweisend mindestens einen Ladeschütz, mindestens eine Sicherung, einen Spannungsmesser und/oder einen Strommesser aufweisen;
- das mindestens eine weitere Gerät ein weiteres Gehäuse, vorzugsweise ein Gussgehäuse, aufweisen, das derart in der weiteren Materialaussparung angeordnet (zum Beispiel eingebaut und/oder integriert) ist, dass der weitere Träger durch das weitere Gehäuse versteift und/oder verstärkt ist;
- das mindestens eine weitere Gerät in der weiteren Materialaussparung von dem weiteren Träger umgriffen sein;
- das mindestens eine weitere Gerät im Wesentlichen eine Plattenform aufweisen, wobei vorzugsweise die Plattenform im Wesentlichen in einer Ebene liegt, die parallel zu einer Querachse des Fahrzeugrahmens und/oder parallel zu einer Hochachse des Fahrzeugrahmens ist;
- die weitere Materialaussparung als eine Durchgangsöffnung, ein Blindloch oder eine Vertiefung ausgeführt sein;
- die weitere Materialaussparung, vorzugsweise ausschließlich, in einem plattenförmigen Abschnitt des weiteren Trägers angeordnet sein;
- die weitere Materialaussparung bezüglich einer Querachse des Fahrzeugrahmens im Wesentlichen mittig in dem weiteren Träger oder im Wesentlichen in einer zu dem mindestens einen weiteren Außenverkleidungsteil gerichteten Hälfte des weiteren Trägers angeordnet sein;
- der weitere Träger einen ersten Befestigungsabschnitt, der an dem Fahrzeugrahmen befestigt ist, und/oder einen zweiten Befestigungsabschnitt, der an dem mindestens einen weiteren Außenverkleidungsteil befestigt ist, aufweisen;
- die weitere Materialaussparung zwischen und/oder beabstandet zu dem ersten Befestigungsabschnitt des weiteren Trägers und/oder dem zweiten Befestigungsabschnitt des weiteren Trägers angeordnet sein;
- die weitere Materialaussparung eine Höhe aufweisen, die mindestens 1/3, vorzugsweise 1/2, einer Höhe des weiteren Trägers entspricht;
- die weitere Materialaussparung eine Breite aufweisen, die mindestens 1/3, vorzugsweise mindestens 1/2, einer Breite des Trägers entspricht, gemessen entlang einer Querachse des Fahrzeugrahmens;
- die weitere Materialaussparung durch eine zumindest teilweise umlaufende Kante des weiteren Trägers begrenzt sein;
- die Kante der weiteren Materialaussparung mindestens einen Befestigungsvorsprung (z. B. Befestigungsnase) aufweisen, an der das mindestens eine weitere Gerät befestigt ist, vorzugsweise mittels einer Schraubverbindung;
- der mindestens eine Befestigungsvorsprung des weiteren Trägers zu einem Inneren der weiteren Materialaussparung hin gerichtet ist;
- der weitere Träger außen an dem Fahrzeugrahmen befestigt sein, vorzugsweise an einer Außenseite eines weiteren Hauptlängsträgers des Fahrzeugrahmens;
- der weitere Träger im Wesentlichen plattenförmig sein;
- der weitere Träger im Wesentlichen in einer Ebene ausgerichtet sein, die parallel zu einer Hochachse des Fahrzeugrahmens und/oder zu einer Querachse des Fahrzeugrahmens ist;
- der weitere Träger, vorzugsweise nur, zwischen dem Fahrzeugrahmen und dem mindestens einen weiteren Außenverkleidungsteil angeordnet sein; und/oder
- die Vorrichtung ferner eine weitere Ladesteckdose, die von dem Träger getragen ist (und beispielsweise an einem weiteren Außenverkleidungsteil angeordnet ist und/oder elektrisch mit dem mindestens einen weiteren Gerät verbunden ist), einen weiteren Spritzschutz, der von dem weiteren Träger getragen ist, und/oder einen weiteren Umgebungserfassungssensor (z. B. Radarsensor), der von dem weiteren Träger getragen ist (und beispielsweise an einem weiteren Außenverkleidungsteil angeordnet ist und/oder elektrisch mit dem mindestens einen weiteren Gerät verbunden ist), aufweisen.

Ein weiterer Aspekt betrifft ein vorzugsweise elektrisch angetriebenes Kraftfahrzeug, bevorzugt ein Nutzfahrzeug (z. B. Lastkraftwagen oder Omnibus). Das Kraftfahrzeug weist eine Vorderachse, eine Hinterachse und eine Vorrichtung wie hierin offenbart auf. Vorzugsweise ist der Träger und/oder das mindestens eine Außenverkleidungsteil benachbart zu der Vorderachse oder der Hinterachse angeordnet.

Es ist auch möglich, die Vorrichtung wie hierin offenbart beispielsweise für Personenkraftwagen oder geländegängige Fahrzeuge zu verwenden.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine perspektivische Rückansicht eines Kraftfahrzeugs gemäß einem Ausführungsbeispiel der vorliegenden Offenbarung;
- Figur 2: eine rein schematische Draufsicht auf einen Ausschnitt aus einer Vorrichtung gemäß einem Ausführungsbeispiel der vorliegenden Offenbarung;
- Figur 3: eine perspektivische Ansicht eines Ausschnitts einer Vorrichtung gemäß einem Ausführungsbeispiel der vorliegenden Offenbarung;
- Figur 4: eine Stirnansicht oder Rückansicht des Ausschnitts der Vorrichtung von Figur 3;
- Figur 5: eine perspektivische Ansicht des Ausschnitt der beispielhaften Vorrichtung der Figuren 3 und 4 mit zusätzlich dargestellten Komponenten; und
- Figur 6: eine Stirnansicht oder Rückansicht des Ausschnitts der Vorrichtung von Figur 5.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

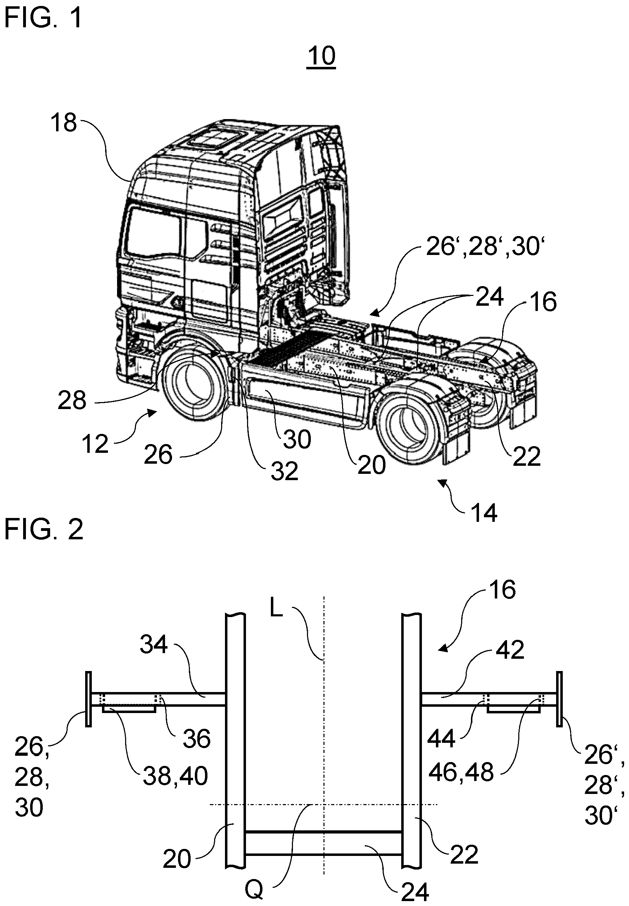

Die Figur 1 zeigt ein Kraftfahrzeug 10. Das Kraftfahrzeug 10 ist vorzugsweise als Nutzfahrzeug ausgeführt. Besonders bevorzugt ist das Kraftfahrzeug 10 als ein Lastkraftwagen, wie in Figur 1 dargestellt ist, oder als ein Omnibus ausgeführt. Der Lastkraftwagen kann beispielsweise als eine Sattelzugmaschine ausgeführt sein, wie in Figur 1 dargestellt ist. Es ist auch möglich, dass der Lastkraftwagen derart modifiziert ist, dass er beispielsweise einen (z. B. Lade-) Aufbau aufweist.

Das Kraftfahrzeug 10 weist mindestens eine Vorderachse 12, mindestens eine Hinterachse 14 und einen Fahrzeugrahmen 16 auf. Das Kraftfahrzeug 10 kann ferner ein Fahrerhaus 18 aufweisen.

Der Fahrzeugrahmen 16 weist vorzugsweise zwei im Wesentlichen parallele Hauptlängsträger 20, 22 und mehrere Querträger 24 auf. Die Querträger 24 sind voneinander beabstandet. Die Querträger 24 sind zwischen den Hauptlängsträgern 20, 22 angeordnet. Die Querträger 24 verbinden die Hauptlängsträger 20, 22 miteinander. Bevorzugt bilden die Hauptlängsträger 20, 22 und die Querträger 24 zusammen einen Leiterrahmen.

Das Fahrerhaus 18 ist auf dem Fahrzeugrahmen 16 abgestützt, zum Beispiel gefedert und/oder gedämpft. Es ist möglich, dass das Fahrerhaus 18 mittels einer Kipp- oder Schwenkvorrichtung bezüglich des Fahrzeugrahmens 16 verschwenkt werden kann, vorzugsweise nach vorne, zum Zugänglichmachen von mindestens einer Komponente, die unterhalb des Fahrerhauses 18 angeordnet ist. Diese Komponente kann beispielsweise an dem Fahrzeugrahmen 16 des Kraftfahrzeugs 10 abgestützt sein. Diese mindestens eine Komponente kann beispielsweise ein Getriebe, ein Hilfsaggregat, eine Traktionsbatterie und/oder eine elektrische Antriebseinrichtung usw. aufweisen.

Das Kraftfahrzeug 10 weist mindestens ein Außenverkleidungsteil 26, 28 und/oder 30 auf. Die Außenverkleidungsteile 26, 28 und 30 können jeweils auf beiden Fahrzeuglängsseiten des Kraftfahrzeugs 10 vorhanden sein, wenn gewünscht.

Das Außenverkleidungsteil 26 ist als eine (zum Beispiel einteilige oder mehrteilige) Kotflügelblende ausgeführt. Das Außenverkleidungsteil 26 ist direkt neben einem Rad der Vorderachse 12 angeordnet. Das Außenverkleidungsteil 26 ist zwischen der Vorderachse 12, insbesondere dem Rad der Vorderachse 12, und dem Außenverkleidungsteil 30 angeordnet. Das Außenverkleidungsteil 26 kann unterhalb des Fahrerhauses 18 angeordnet sein. Das Außenverkleidungsteil 26 kann auf Höhe des Fahrzeugrahmens 16, vorzugsweise der Hauptlängsträger 20, 22 des Fahrzeugrahmens 16, angeordnet sein.

Das Außenverkleidungsteil 26 kann optional mindestens ein Gerät 32 tragen. Das mindestens eine Gerät 32 kann beispielsweise eine Ladesteckdose zum Anschließen eines Ladekabels zum Aufladen einer Traktionsbatterie des Kraftfahrzeugs 10 und/oder eine (z. B. Seiten-) Umgebungserfassungssensorik (zum Beispiel Radarsensor(en)) aufweisen.

Das Außenverkleidungsteil 28 ist als eine Kotflügelradschale ausgeführt. Das Außenverkleidungsteil 28 ist direkt oberhalb des Rads der Vorderachse 12 angeordnet. Das Außenverkleidungsteil 28 kann unterhalb des Fahrerhauses 18 angeordnet sein. Das Außenverkleidungsteil 28 kann auf Höhe des Fahrzeugrahmens 16, vorzugsweise der Hauptlängsträger 20, 22 des Fahrzeugrahmens 16, angeordnet sein.

Das Außenverkleidungsteil 30 ist als eine Seitenvollverkleidung ausgeführt. Das Außenverkleidungsteil 30 ist zwischen der Vorderachse 12 und der Hinterachse 14 angeordnet. Das Außenverkleidungsteil 30 ist bevorzugt angrenzend an das Außenverkleidungsteil 26 angeordnet. Das Außenverkleidungsteil 30 verkleidet einen Längsabschnitt des Kraftfahrzeugs 10 zwischen der Vorderachse 12 und der Hinterachse 14. Das Außenverkleidungsteil 30 kann auf Höhe des Fahrzeugrahmens 16, vorzugsweise der Hauptlängsträger 20, 22 des Fahrzeugrahmens 16, angeordnet sein.

Die Figur 2 zeigt rein schematisch, wie mindestens eines der Außenverkleidungsteile 26, 28, 30 an dem Fahrzeugrahmen 16 befestigt ist.

Das Außenverkleidungsteil 26, 28 und/oder 30 ist von einem Träger 34 getragen. Der Träger 34 ist wiederum an dem Fahrzeugrahmen 16 getragen. Der Träger 34 ist bevorzugt ausschließlich zwischen dem Hauptlängsträger 20 und dem Außenverkleidungsteil 26, 28 und/oder 30 angeordnet. Bevorzugt ist eine Innenseite des Außenverkleidungsteils 26, 28 und/oder 30 an dem Träger 34 befestigt, zum Beispiel mittels einer lösbaren Schraubenverbindung. Bevorzugt ist der Träger 34 an einer Außenseite eines der Hauptlängsträger 20, 22 befestigt, zum Beispiel mittels einer lösbaren Schraubenverbindungen. Vorzugsweise ist der Träger 34 im Wesentlichen plattenförmig. Bevorzugt ist der Träger 34 im Wesentlichen in einer Ebene ausgerichtet ist, die parallel zu einer Hochachse (senkrecht zu Längsachse L und Querachse Q) des Fahrzeugrahmens 16 und parallel zu einer Querachse Q des Fahrzeugrahmens 16 ist.

Eine Besonderheit der vorliegenden Offenbarung besteht darin, dass der Träger 34 eine Materialaussparung 36 aufweist, in der mindestens ein Gerät 38 aufgenommen bzw. integriert sein kann.

Die Materialaussparung 36 ist bevorzugt als eine Durchgangsöffnung im Träger 34 ausgeführt, die beispielsweise zwei entgegengesetzte Seiten des Trägers 34 (z. B. Vorderseite und Rückseite des Trägers 34 bezüglich einer Längsachse L des Fahrzeugrahmens 16) miteinander verbindet. Es ist allerdings auch möglich, dass die Materialaussparung 36 beispielsweise als ein Blindloch oder als eine Vertiefung in dem Träger 34 ausgeführt ist. Vorzugsweise ist die Materialaussparung 36 in einem plattenförmigen Abschnitt des vorzugsweise insgesamt plattenförmigen Trägers 34 angeordnet.

Beispielsweise ist die Materialaussparung 36 bezüglich einer Querachse Q des Fahrzeugrahmens 16 im Wesentlichen in einer äußeren Hälfte des Trägers 34 angeordnet, das heißt, in der Hälfte nahe oder angrenzend an das Außenverkleidungsteil 26, 28 und/oder 30 bzw. in der Hälfte entfernt von dem Fahrzeugrahmen 16 (dem Hauptlängsträger 20). Es ist allerdings auch möglich, dass die Materialaussparung 36 bezüglich einer Querachse Q des Fahrzeugrahmens 16 bspw. im Wesentlichen mittig in dem Träger 34 angeordnet ist.

Die Materialaussparung 36 ist derart ausgeführt, dass das mindestens eine Gerät 38 in der Materialaussparung 36 angeordnet werden kann. Das mindestens eine Gerät 38 ist damit zumindest teilweise in den Träger 34 integriert bzw. eingebaut. Der Träger 34 kann zur Gewichtseinsparung noch weitere Materialaussparungen aufweisen, die frei von jeglichen Einbauten sind.

Beispielsweise ist das mindestens eine Gerät 38 teilweise, zu einem Großteil, im Wesentlichen vollständig oder vollständig in der Materialaussparung 36 aufgenommen. Hierfür kann die Materialaussparung 36 vorzugsweise eine Höhe aufweisen, die mindestens 1/3, vorzugsweise 1/2, einer Höhe des Trägers 34 entspricht. Alternativ oder zusätzlich kann die Materialaussparung 36 eine Breite aufweisen, die mindestens 1/3, vorzugsweise mindestens 1/2, einer Breite des Trägers 34 entspricht, gemessen entlang einer Querachse Q des Fahrzeugrahmens 16. Es ist möglich, dass das mindestens eine Gerät 38 in der Materialaussparung 36 von dem Träger 34 teilweise umgriffen ist.

Das Gerät 38 ist vorzugsweise an dem Träger 34 befestigt, vorzugsweise in der Materialaussparung 36 und/oder angrenzend an die Materialaussparung 36. Die Befestigung kann beispielsweise mittels einer lösbaren Schraubenverbindungen erfolgen.

Vorteilhaft weist das mindestens eine Gerät 38 im Wesentlichen eine Plattenform bzw. abgeflachte Form auf. Bevorzugt kann diese Plattenform im Wesentlichen in einer Ebene liegen, die parallel zu einer Querachse Q des Fahrzeugrahmens 16 und parallel zu einer Hochachse (senkrecht zur Querachse Q und zur Längsachse L) des Fahrzeugrahmens 16 ist. Eine Außenkontur des Geräts 38 kann bspw. abgerundet oder mehreckig sein.

Das mindestens eine Gerät 38 ist vorzugsweise ein elektrisches Gerät. Besonders bevorzugt weist das mindestens eine Gerät 38 eine Hochvolt-Komponente, eine Steuereinheit und/oder eine elektrische Sicherheitseinrichtung auf. Die Hochvolt-Komponente kann beispielsweise einem Hochvolt-Netz des Kraftfahrzeugs 10 zugeordnet sein. Die Steuereinheit kann beispielsweise als eine Ladesteuereinheit (Ladesteuergerät) ausgeführt sein. Die Ladesteuereinheit kann bspw. einen Ladevorgang einer Traktionsbatterie des Kraftfahrzeugs 10 steuern und beispielsweise eine Kommunikation mit einer externen Ladestation, zum Beispiel Ladesäule, ermöglichen (z. B. Sollstromanforderung, Sollspannungsanforderung usw.). Die Ladesteuereinheit kann bspw. mit einem Ladetaster in Kommunikationsverbindung sein und/oder eine Steckerverriegelung an einer Ladesteckdose (z. B. Gerät 32) des Kraftfahrzeugs 10 steuern.

Die elektrische Sicherheitseinrichtung kann mindestens eine elektrische Komponente aufweisen, mit der ein elektrisches Netz, vorzugsweise Hochvolt-Netz, des Kraftfahrzeugs 10 und/oder ein Ladevorgang einer Traktionsbatterie des Kraftfahrzeugs 10 abgesichert und/oder überwacht werden kann. Die elektrische Sicherheitseinrichtung kann beispielsweise mindestens einen Ladeschütz, mindestens eine (zum Beispiel Schmelz-) Sicherung, einen Spannungsmesser und/oder einen Strommesser aufweisen.

Bevorzugt weist das mindestens eine Gerät 38 ein Gehäuse 40 auf. Dieses Gehäuse 40 ist bevorzugt als ein Gussgehäuse (zum Beispiel ein Eisengussgehäuse oder ein Alugussgehäuse) ausgeführt. Das mindestens eine Gerät 38 kann mit dessen Gehäuse 40 derart in der Materialaussparung 36 angeordnet bzw. integriert sein, dass das Gehäuse 40 den Träger 34 insgesamt versteift und verstärkt. Das Gehäuse 40 kann beispielsweise einteilig oder mehrteilig sein. Das mindestens eine Gerät 38 kann mittels des Gehäuses 40 an bzw. in dem Träger 34 befestigt sein. Das Gehäuse 40 kann Kühlrippen und/oder einen Kühlmittelanschluss zum Zuführen eines Kühlmittels zum Kühlen des Geräts 38 aufweisen.

Es ist möglich, dass die hierin offenbarte Technik bezüglich einer Anordnung mindestens eines Geräts 38 in einer Materialaussparung 36 eines Trägers 34 mehrfach im Kraftfahrzeug 10 angewendet wird, zum Beispiel auf der gleichen Längsaußenseite des Kraftfahrzeugs 10 und/oder auf beiden Längsaußenseiten des Kraftfahrzeugs 10. Beispielhaft zeigt Figur 2 einen weiteren Träger 42 mit einer weiteren Materialaussparung 44 in der mindestens ein weiteres Gerät 46 mit einem optionalen weiteren Gehäuse 48 angeordnet ist. Der weitere Träger 42 kann entsprechend dem Träger 34, die weitere Materialaussparung 44 entsprechend der Materialaussparung 36, das mindestens eine weitere Gerät 46 entsprechend dem mindestens einen Gerät 38 und/oder das weitere Gehäuse 48 entsprechend dem Gehäuse 40 konfiguriert sein, sodass an dieser Stelle auf weitere Ausführungen verzichtet wird, um Wiederholungen zu vermeiden.

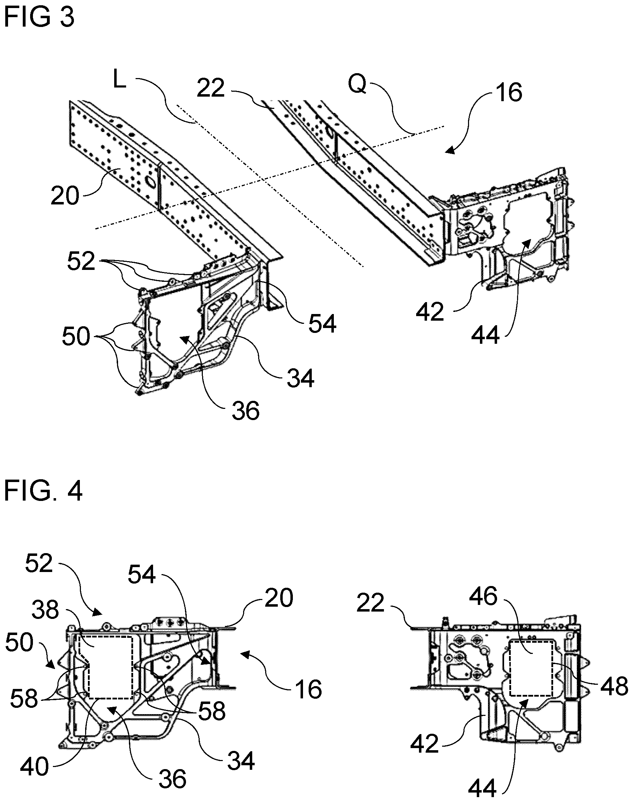

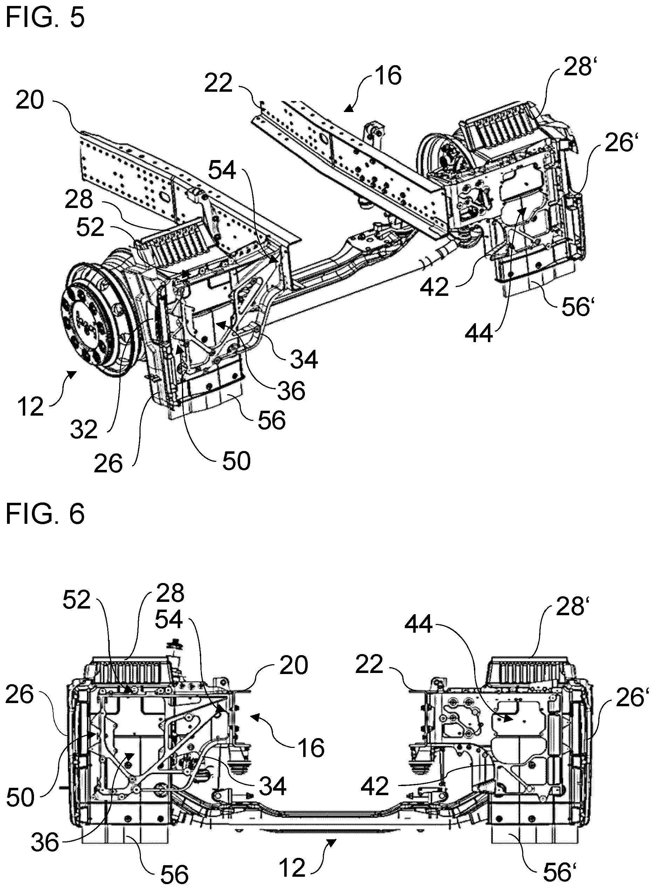

Die Figuren 3 bis 6 zeigen ein bevorzugtes Ausführungsbeispiel in unterschiedlichen Ansichten, wobei aus Übersichtsgründen lediglich in Figur 4 das mindestens eine Gerät 38 mit dem optionalen Gehäuse 40 sowie das mindestens eine optionale Gerät 46 mit dem Gehäuse 48 schematisch dargestellt ist.

Die Träger 34, 42 tragen jeweils die Außenverkleidungsteile 26('), 28(') (sowie 30(') - nicht dargestellt). Beispielsweise ist das als Kotflügelblende ausgeführte Außenverkleidungsteil 26 an einem bezüglich der Querachse Q äußersten Befestigungsabschnitt 50 des Trägers 34 befestigt. Beispielsweise ist das als Kotflügelradschale ausgeführte Außenverkleidungsteil 28 an einem Befestigungsabschnitt 52 des Trägers 34 befestigt. Der Befestigungsabschnitt 52 kann einer Oberseite des Trägers 34 und/oder an einer Vorderseite (bezüglich der Längsachse L des Fahrzeugrahmens) des Trägers 34 befestigt sein. An dem Außenverkleidungsteil 28 kann optional ein Spritzschutz oder Spritzschutzlappen 56 befestigt sein, der somit vorzugweise ebenfalls von dem Träger 34 getragen ist. Beispielsweise ist ferner ein Befestigungsabschnitt 54 des Trägers 34 an einer Außenseite des Hauptlängsträgers 20 befestigt.

Die Materialaussparung 36 bzw. das mindestens eine Gerät 38 kann vorzugsweise im Träger 34 zwischen und/oder beabstandet zu dem Befestigungsabschnitten 50, 52 und/oder 54 angeordnet sein.

Es ist wiederum möglich, dass der weitere Träger 42 zumindest prinzipiell entsprechend dem Träger 34 konfiguriert ist, vorzugsweise bezüglich der Befestigungsabschnitte 50, 52 und 54, wobei der Träger 34 vorzugsweise an einer Außenseite des Hauptlängsträgers 22 befestigt ist.

Bevorzugt ist die Materialaussparung 36 durch eine vollständig umlaufende Kante des Trägers 34 begrenzt. Die Kante kann einen oder mehrere Befestigungsvorsprünge 58 (z. B. Befestigungsnasen) aufweisen (aus Übersichtsgründen nur in Figur 4 mit Bezugszeichen versehen). An den Befestigungsvorsprüngen 58 kann das mindestens eine Gerät 38, vorzugsweise das Gehäuse 40 des Geräts 38, zum Beispiel mittels Schraubverbindungen befestigt sein. Der mindestens eine Befestigungsvorsprung kann zu einem Inneren der Materialaussparung 36 hin gerichtet sein und/oder abgeflacht bzw. plattenförmig sein. Alternativ oder zusätzlich kann bspw. das Außenverkleidungsteil 28 an dem einen oder den mehreren Befestigungsvorsprüngen 58 befestigt sein.

Auch wenn die vorliegende Offenbarung unter Bezugnahme auf ein besonders bevorzugtes Ausführungsbeispiel, bei dem der Träger 34 im Bereich der Vorderachse 12 des Kraftfahrzeugs 10 angeordnet ist, beschrieben ist, ist es möglich, die hierin beschriebene Technik auch auf andere und/oder anders angeordnete Träger des Kraftfahrzeugs 10 anzuwenden, die ein Außenverkleidungsteil an dem Fahrzeugrahmen 16 befestigen, zum Beispiel im Bereich einer zweiten Vorderachse oder im Bereich der Hinterachse 14.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die einzelnen Merkmale des unabhängigen Anspruchs 1 jeweils unabhängig voneinander offenbart. Zusätzlich sind auch die Merkmale der Unteransprüche unabhängig von sämtlichen Merkmalen des unabhängigen Anspruchs 1 und beispielsweise unabhängig von den Merkmalen bezüglich des Vorhandenseins und/oder der Konfiguration des Fahrzeugrahmens, des mindestens einen Außenverkleidungsteils, des Trägers und/oder des mindestens einen Geräts des unabhängigen Anspruchs 1 offenbart. Alle Bereichsangaben hierin sind derart offenbart zu verstehen, dass gleichsam alle in den jeweiligen Bereich fallenden Werte einzeln offenbart sind, z. B. auch als jeweils bevorzugte engere Außengrenzen des jeweiligen Bereichs.

### Bezugszeichenliste

- 10: Kraftfahrzeug
- 12: Vorderachse
- 14: Hinterachse
- 16: Fahrzeugrahmen
- 18: Fahrerhaus
- 20: Hauptlängsträger
- 22: Hauptlängsträger
- 24: Querträger
- 26: Außenverkleidungsteil (z. B. Kotflügelblende)
- 28: Außenverkleidungsteil (z. B. Kotflügelradschale)
- 30: Außenverkleidungsteil (z. B. Seitenvollverkleidung)
- 32: Gerät
- 34: Träger
- 36: Materialaussparung
- 38: Gerät
- 40: Gehäuse
- 42: Weiterer Träger
- 44: Weitere Materialaussparung
- 46: Weiteres Gerät
- 48: Weiteres Gehäuse
- 50: Befestigungsabschnitt
- 52: Befestigungsabschnitt
- 54: Befestigungsabschnitt
- 56: Spritzschutz
- 58: Befestigungsvorsprung

- L: Längsachse
- Q: Querachse

## Patentansprüche

1. Vorrichtung für ein, vorzugsweise elektrisch angetriebenes, Kraftfahrzeug (10), vorzugsweise Nutzfahrzeug, aufweisend:
einen Fahrzeugrahmen (16);
mindestens ein Außenverkleidungsteil (26, 28, 30);
einen Träger (34), der an dem Fahrzeugrahmen (16) befestigt ist und das mindestens eine Außenverkleidungsteil (26, 28, 30) trägt, wobei der Träger (34) eine Materialaussparung (36) aufweist; und
mindestens ein, vorzugsweise elektrisches, Gerät (38), das in der Materialaussparung (36) angeordnet und von dem Träger (34) getragen ist.

2. Vorrichtung nach Anspruch 1, wobei:
das mindestens eine Außenverkleidungsteil (26, 28, 30) eine Kotflügelradschale, eine Kotflügelblende und/oder eine Seitenvollverkleidung aufweist.

3. Vorrichtung nach Anspruch 1 oder Anspruch 2, wobei das mindestens eine Gerät (38) aufweist:
eine Hochvolt-Komponente;
eine Steuereinheit, vorzugweise eine Ladesteuereinheit zum Steuern eines Ladevorgangs einer Traktionsbatterie; und/oder
eine elektrische Sicherheitseinrichtung, vorzugsweise aufweisend mindestens einen Ladeschütz, mindestens eine Sicherung, einen Spannungsmesser und/oder einen Strommesser.

4. Vorrichtung nach einem der vorherigen Ansprüche, wobei:
das mindestens eine Gerät (38) ein Gehäuse (40), vorzugsweise ein Gussgehäuse, aufweist, das derart in der Materialaussparung (36) angeordnet ist, dass der Träger (34) durch das Gehäuse (40) versteift und/oder verstärkt ist.

5. Vorrichtung nach einem der vorherigen Ansprüche, wobei:
das mindestens eine Gerät (38) in der Materialaussparung (36) von dem Träger (34) umgriffen ist; und/oder
das mindestens eine Gerät (38) im Wesentlichen eine Plattenform aufweist, wobei vorzugsweise die Plattenform im Wesentlichen in einer Ebene liegt, die parallel zu einer Querachse des Fahrzeugrahmens (16) und parallel zu einer Hochachse des Fahrzeugrahmens (16) ist.

6. Vorrichtung nach einem der vorherigen Ansprüche, wobei mindestens eines der nachfolgenden Merkmale erfüllt ist:
die Materialaussparung (36) ist als eine Durchgangsöffnung, ein Blindloch oder eine Vertiefung ausgeführt;
die Materialaussparung (36) ist, vorzugsweise ausschließlich, in einem plattenförmigen Abschnitt des Trägers (34) angeordnet; und
die Materialaussparung (36) ist bezüglich einer Querachse (Q) des Fahrzeugrahmens (16) im Wesentlichen mittig in dem Träger (34) oder im Wesentlichen in einer zu dem mindestens einen Außenverkleidungsteil (26, 28, 30) gerichteten Hälfte des Trägers (34) angeordnet.

7. Vorrichtung nach einem der vorherigen Ansprüche, wobei:
der Träger (34) einen ersten Befestigungsabschnitt (54), der an dem Fahrzeugrahmen (16) befestigt ist, und einen zweiten Befestigungsabschnitt (50, 52), der an dem mindestens einen Außenverkleidungsteil (26, 28, 30) befestigt ist, aufweist; und
die Materialaussparung (36) zwischen und/oder beabstandet zu dem ersten Befestigungsabschnitt (54) und dem zweiten Befestigungsabschnitt (50, 52) angeordnet ist.

8. Vorrichtung nach einem der vorherigen Ansprüche, wobei:
die Materialaussparung (36) eine Höhe aufweist, die mindestens 1/3, vorzugsweise 1/2, einer Höhe des Trägers (34) entspricht; und/oder
die Materialaussparung (36) eine Breite aufweist, die mindestens 1/3, vorzugsweise mindestens 1/2, einer Breite des Trägers (34) entspricht, gemessen entlang einer Querachse (Q) des Fahrzeugrahmens (16).

9. Vorrichtung nach einem der vorherigen Ansprüche, wobei:
die Materialaussparung (36) durch eine zumindest teilweise umlaufende Kante des Trägers (34) begrenzt ist; und
die Kante mindestens einen Befestigungsvorsprung (58) aufweist, an der das mindestens eine Gerät (38) befestigt ist, vorzugsweise mittels einer Schraubverbindung.

10. Vorrichtung nach Anspruch 9, wobei:
der mindestens eine Befestigungsvorsprung (58) zu einem Inneren der Materialaussparung (36) hin gerichtet ist.

11. Vorrichtung nach einem der vorherigen Ansprüche, wobei mindestens eines der nachfolgenden Merkmale erfüllt ist:
der Träger (34) ist außen an dem Fahrzeugrahmen (16) befestigt, vorzugsweise an einer Außenseite eines Hauptlängsträgers (20) des Fahrzeugrahmens (16);
der Träger (34) ist im Wesentlichen plattenförmig;
der Träger (34) ist im Wesentlichen in einer Ebene ausgerichtet, die parallel zu einer Hochachse des Fahrzeugrahmens (16) und zu einer Querachse des Fahrzeugrahmens (16) ist; und
der Träger (34) ist, vorzugsweise nur, zwischen dem Fahrzeugrahmen (16) und dem mindestens einen Außenverkleidungsteil (26, 28, 30) angeordnet.

12. Vorrichtung nach einem der vorherigen Ansprüche, ferner aufweisend mindestens eines von:
eine Ladesteckdose (32), die von dem Träger (34) getragen ist;
einen Spritzschutz (56), der von dem Träger (34) getragen ist;
einen Umgebungserfassungssensor (32), der von dem Träger (34) getragen ist.

13. Vorrichtung nach einem der vorherigen Ansprüche, ferner aufweisend:
mindestens ein weiteres Außenverkleidungsteil (26', 28', 30');
einen weiteren Träger (42), der an dem Fahrzeugrahmen (16) befestigt ist und der das mindestens eine weitere Außenverkleidungsteil (26', 28', 30') trägt, wobei der weitere Träger (42) eine weitere Materialaussparung (44) aufweist; und
mindestens ein weiteres, vorzugsweise elektrisches, Gerät (46), das in der weiteren Materialaussparung (44) angeordnet ist.

14. Vorrichtung nach Anspruch 13, wobei:
der weitere Träger (42) auf einer dem Träger (34) entgegengesetzten Seite des Fahrzeugrahmens (16) oder auf der gleichen Seite des Fahrzeugrahmens (16) wie der Träger (34) angeordnet; und/oder
das mindestens eine weitere Außenverkleidungsteil (26,' 28', 30') entsprechend dem mindestens einen Außenverkleidungsteil (26, 28, 30), der weitere Träger (42) entsprechend dem Träger (34), die weitere Materialaussparung (44) entsprechend der Materialaussparung (36) und/oder das mindestens eine weitere Gerät (46) entsprechend dem mindestens einen Gerät (38) ausgeführt ist.

15. Kraftfahrzeug (10), vorzugsweise Nutzfahrzeug, aufweisend:
eine Vorderachse (12);
eine Hinterachse (14); und
eine Vorrichtung nach einem der vorherigen Ansprüche, wobei vorzugsweise der Träger (34) und/oder das mindestens eine Außenverkleidungsteil (26, 28, 30) benachbart zu der Vorderachse (12) oder der Hinterachse (14) angeordnet ist.
